# EUROPEAN PATENT APPLICATION

(11) **EP 4 815 074 A1**
(43) Date of publication of application: **30.09.2026**
(21) Application number: 23959177.9
(22) Date of filing: 22.11.2023
(51) Int. Cl.: H01M 8/04537

(54) **ENERGY MANAGEMENT METHOD AND SYSTEM, COMPUTER DEVICE, AND READABLE STORAGE MEDIUM**

(71) Applicant: The Hong Kong Polytechnic University, Hong Kong 999077 (HK)
(72) Inventor: CHENG, Ka Wai Eric, Hong Kong Polytechnic University, Hung Hom Kowloon Hong Kong 999077 (CN); XUE, Xiangdang, Hong Kong Polytechnic University, Hung Hom Kowloon Hong Kong 999077 (CN); LI, Molly Meng-Jung, Hong Kong Polytechnic University, Hung Hom Kowloon Hong Kong 999077 (CN); WONG, Chiu Shek, Hong Kong Polytechnic University, Hung Hom Kowloon Hong Kong 999077 (CN); LAU, Shu Ping, Hong Kong Polytechnic University, Hung Hom Kowloon Hong Kong 999077 (CN)
(74) Representative: Petraz, Gilberto Luigi
(86) International application number: PCT/CN2023/133400
(87) International publication number: WO 2025/107203

(57) **Abstract**

An energy management method and system, a computer device, and a readable storage medium. The energy management method comprises obtaining a first current output power and a previous output power of a first energy supply device; obtaining a current power change rate of the first energy supply device on the basis of the first current output power and the previous output power; obtaining a first reference power of the first energy supply device on the basis of the first current output power, the previous output power and the current power change rate; obtaining a second current output power of a second energy supply device; and obtaining a second reference power of the second energy supply device on the basis of the first current output power, the second current output power and the first reference power; obtaining a current flow velocity of a first gas, a current flow velocity of a second gas, and a current furnace temperature; and obtaining a reference flow velocity of the first gas and a reference furnace temperature on the basis of the current flow velocity of the first gas, the current flow velocity of the second gas, and the current furnace temperature.

## Description

### TECHNICAL FIELD

The present disclosure relates to the field of hybrid energy storage, and in particular, to an energy management method, system, computer device and readable storage medium.

### BACKGROUND

Proton exchange membrane fuel cells (PEMFCs) provide electricity using hydrogen and are currently used in various traffic transportations or other electrical devices. In order to improve the dynamic power and power density of the fuel cells, the fuel cells are usually used in combination with other energy supplier(s) (such as a super-capacitor, a lithium-ion battery, etc.) to ensure better performance in the vehicles or other electrical devices.

However, during the use of fuel cells and other energy suppliers, there may be an imbalance in energy supply, which not only reduces the operating efficiency of the whole device, but also reduces the operating efficiency and service life of each energy supplier, and increases power consumption.

### SUMMARY

Embodiments of the present disclosure provide an energy management method, including: obtaining a first current output power and a previous output power of a first energy supplier; obtaining a current power change rate of the first energy supplier according to the first current output power and the previous output power; obtaining a first reference power of the first energy supplier according to the first current output power, the previous output power and the current power change rate; obtaining a second current output power of a second energy supplier; obtaining a second reference power of the second energy supplier according to the first current output power, the second current output power and the first reference power; obtaining a current flow rate of a first gas, a current flow rate of a second gas and a current furnace temperature; where the first energy supplier is connected to a gas conversion device, the first gas is converted into the second gas through the gas conversion device, the second gas is used for the first energy supplier to generate electricity, and the current furnace temperature is a current temperature of a furnace in the gas conversion device; and obtaining a reference flow rate of the first gas and a reference furnace temperature according to the current flow rate of the first gas, the current flow rate of the second gas, and the current furnace temperature.

An embodiment of the present disclosure also provides an energy management system, including an obtaining module and a processing module. The obtaining module is configured to obtain a first current output power and a previous output power of a first energy supplier, obtain a current flow rate of a first gas and a current furnace temperature, and obtain a current flow rate of a second gas; the processing module is configured to obtain a current power flow rate of the first energy supplier according to the first current output power and the previous output power; the processing module is further configured to obtain a first reference power of the first energy supplier according to the first current output power, the previous output power and the current power change rate; the obtaining module is further configured to obtain a second current output power of a second energy supplier; the processing module is further configured to obtain a second reference power of the second energy supplier according to the first current output power, the second current output power and the first reference power; the processing module is further configured to obtain a reference flow rate of the first gas and a reference furnace temperature according to the current flow rate of the first gas, the current furnace temperature and the current flow rate of the second gas.

An embodiment of the present disclosure also provides a computer device, including a processor, a memory, an input interface and an output interface; the processor is connected to the memory, the input interface and the output interface respectively, where the input interface and the output interface are configured to receive data and output data respectively, the memory is configured to store a computer program, and the processor is configured to call the computer program, so that the computer device executes the energy management method described in any of the above embodiments.

An embodiment of the present disclosure also provides a computer-readable storage medium that stores a computer program, and the computer program is adapted to be loaded and executed by a processor, so that a computer device having the processor executes the energy management method described in any of the above embodiments.

It can be seen from the above technical solutions that the energy management method of the embodiments of the present disclosure has at least one of the following advantages and positive effects.

In the embodiments of the present disclosure, the first reference power of the first energy supplier is obtained through the first current output power, the previous output power and the current power change rate, and the first reference power adapts to the power change rate of the first energy supplier, thus the operating efficiency and service life of the first energy supplier can be improved. The second reference power of the second energy supplier is obtained according to the first current output power, the second current output power and the first reference power, and the reference flow rate of the first gas and the reference furnace temperature are obtained through the current flow rate of the first gas, the current flow rate of the second gas and the current furnace temperature, thereby realizing the power allocation between the first energy supplier and the second energy supplier, optimizing the allocation of load power, and balancing the energy supply of the first energy supplier and the second energy supplier, moreover, the operation is efficient, the energy consumption is reduced and the service life of the two energy suppliers is extended.

### BRIEF DESCRIPTION OF THE DRAWINGS

The above and other features and advantages of the present disclosure will become more apparent by describing in detail example embodiments thereof with reference to the accompanying drawings.
FIG. 1 is a flow chart of an energy management method according to some embodiments of the present disclosure.
FIG. 2 is an energy conversion architecture diagram of an ammonia-powered proton exchange membrane fuel cell hybrid application according to some embodiments of the present disclosure.
FIG. 3 is a control architecture diagram of an energy management method according to some embodiments of the present disclosure.
FIG. 4 is a schematic diagram showing a relationship between an output power and an operating efficiency of the PEM fuel cell according to some embodiments of the present disclosure.
FIG. 5 is a flow chart of regulating a furnace temperature, an ammonia flow rate and a hydrogen flow rate according to some embodiments of the present disclosure.
FIG. 6 is a schematic diagram showing a relationship among the ammonia gas, the hydrogen gas and a furnace temperature according to some embodiments of the present disclosure.
FIG. 7 is an energy conversion architecture diagram of an ammonia-powered proton exchange membrane fuel cell hybrid application according to other embodiments of the present disclosure.
FIG. 8 is an energy conversion architecture diagram of an ammonia-powered proton exchange membrane fuel cell hybrid application according to other embodiments of the present disclosure.

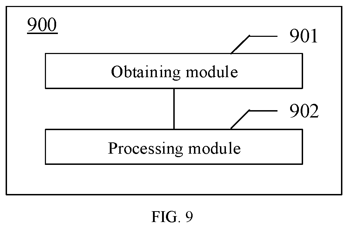

FIG. 9 is a block diagram of an energy management system according to some embodiments of the present disclosure.

### DETAILED DESCRIPTION

The terms "first", "second", etc. in the present disclosure are used only as labels and are not numerical limitations to their objects. The flow charts shown in the drawings are only illustrative, and it is unnecessary to include all contents and operations/steps, nor must they be performed in the order described. For example, some operations/steps can be decomposed, and some operations/steps can be merged or partially merged, so the actual order of execution may change according to the actual situation.

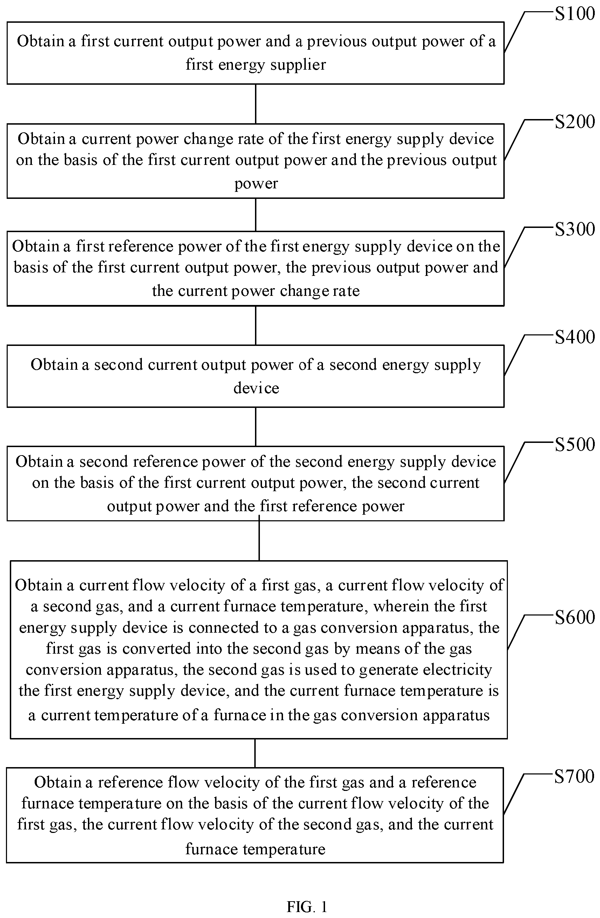

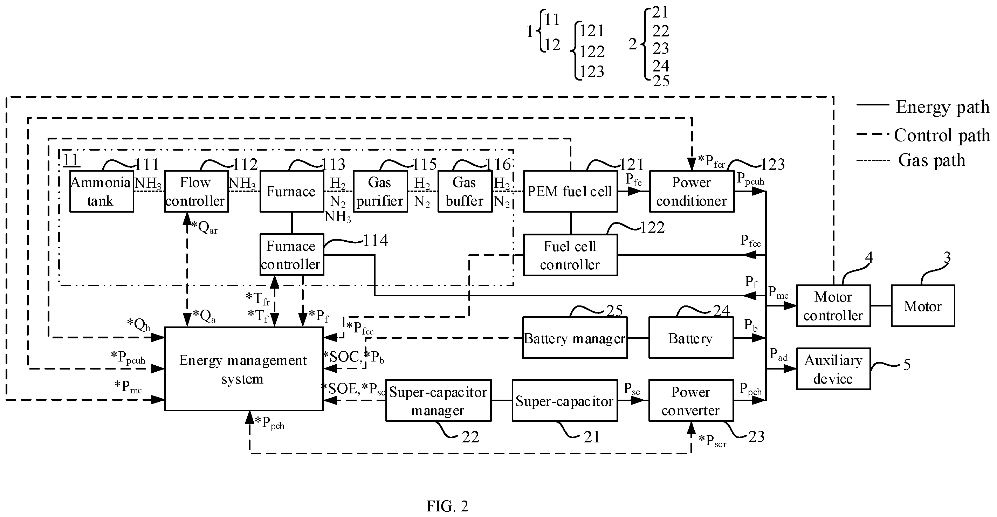

As shown in FIG. 1, an embodiment of the present disclosure provides an energy management method, which can be applied to an ammonia-powered PEM fuel cell hybrid electric vehicle as shown in FIG. 2 to ensure the high-efficiency operation of the hybrid energy supply of the hybrid electric vehicle. The embodiments of the present disclosure take the PEM fuel cell hybrid electric vehicle as an example, but they are not limited thereto. The energy management method can also be applied to other hybrid electric equipment.

As shown in FIG. 2, the architecture of an ammonia-powered PEM fuel cell hybrid application may include a first energy supply device 1, a second energy supply device 2, a load, and an energy management system 900.

The first energy supply device 1 includes a gas conversion device 11 and a fuel cell device 12. The gas conversion device 11 may include an ammonia tank 111, a flow controller 112, a furnace 113, a furnace controller 114, a gas purifier 115 and a gas buffer 116. The fuel cell device 12 may include a PEM fuel cell 121, a fuel cell controller 122, and a power conditioner 123. The second energy supply device 2 may include a super-capacitor 21, a super-capacitor manager 22, a power converter 23, a battery 24 and a battery manager 25. The load may include a motor 3, a motor controller 4 and/or an auxiliary device 5.

The ammonia tank 111 is used to store ammonia (NH₃) and output the ammonia to the flow controller 112. The flow controller 112 is used to control the flow rate of ammonia, and can measure the flow rate ^{*}Qₐ of ammonia in real time and provide it to the energy management system 900, and receive an ammonia flow rate reference value ^{*}Qₐᵣ sent by the energy management system 900 to regulate the flow rate of ammonia, and output the regulated ammonia to the furnace 113. The furnace controller 114 is used to control the temperature of the furnace 113, so that the ammonia is split into hydrogen and nitrogen by the furnace 113, and hydrogen, nitrogen and a small amount of ammonia are output to the gas purifier 115. The furnace controller 114 can measure the furnace temperature ^{*}T_{f} and input power ^{*}P_{f} thereof in real time and send them to the energy management system 900, and receive the reference furnace temperature ^{*}T_{fr} of the furnace 113 fed back by the energy management system 900, and the real-time input power of the furnace controller 114 is P_{f}. The gas purifier 115 removes ammonia from the mixed gas of hydrogen, nitrogen, and ammonia, and outputs the hydrogen and nitrogen to the gas buffer 116. The gas buffer 116 is used to maintain the stability of the gas flow and provide hydrogen and nitrogen to the PEM fuel cell 121.

The PEM fuel cell 121 is used to convert hydrogen into electric energy, and can measure the flow rate ^{*}Qₕ of hydrogen in real time, and send ^{*}Qₕ to the energy management system 900. The magnitude of the flow rate of the hydrogen is positively correlated with the electric energy generated by the PEM fuel cell 121. The fuel cell controller 122 is used to provide power to the auxiliary components in the PEM fuel cell 121 and send its own input power ^{*}P_{fcc} measured in real time to the energy management system 900. The power conditioner 123 is used to adjust the output power of the PEM fuel cell 121, and send its own output power ^{*}P_{pcuh} measured in real time to the energy management system 900, and receive the reference output power ^{*}P_{fcr} of the power conditioner 123 sent by the energy management system 900.

The power converter 23 is used to adjust the output power P_{sc} of the super-capacitor 21 and send the real-time measured high-side power ^{*}P_{pch} of the power converter 23 to the energy management system 900, and receive the high-side power reference value ^{*}P_{scr} of the power converter sent by the energy management system 900. The power converter 23 has a high-voltage side and a low-voltage side, and the high-side power refers to the power of the high-voltage side of the power converter 23. The super-capacitor manager 22 is used to monitor the operation of the super-capacitor 21 and provide real-time measured state of energy (^{*}SOE) and output power P_{sc} to the energy management system 900.

The battery manager 25 monitors the operation of the battery 24. The output power of the battery 24 is P_{b}. The battery manager 25 measures the output power ^{*}P_{b} of the battery 24 in real time and the state of charge (^{*}SOC), and sends ^{*}P_{b} and ^{*}SOC to the energy management system 900. The battery 24 can automatically meet the power changes of the auxiliary device 5, and the input power of the auxiliary device 5 is represented by P_{ad}.

The motor controller 4 is used to adjust the output power of the motor 3. The input power of the motor controller 4 is P_{mc}. The motor controller 4 can measure its input power ^{*}P_{mc} in real time and send it to the energy management system 900.

The PEM fuel cell 121, the super-capacitor 21 and the battery 24 are used to provide electric energy to the motor controller 4, the furnace controller 114, the fuel cell controller 122 and the auxiliary device 5, and the super-capacitor 21 and the battery 24 can absorb braking energy through the motor 3 and motor controller 4 (under braking). The super-capacitor 21 and the battery 24 can also receive the electric energy provided by the PEM fuel cell 121 to maintain the stable operation of the whole vehicle.

As shown in FIG. 1, the energy management method according to the embodiment of the present disclosure includes the following steps S100~S700.

In S100: a first current output power ^{*}P_{fc}(tₖ) and a previous output power ^{*}P_{fc}(tₖ₋₁) of a first energy supplier are obtained.

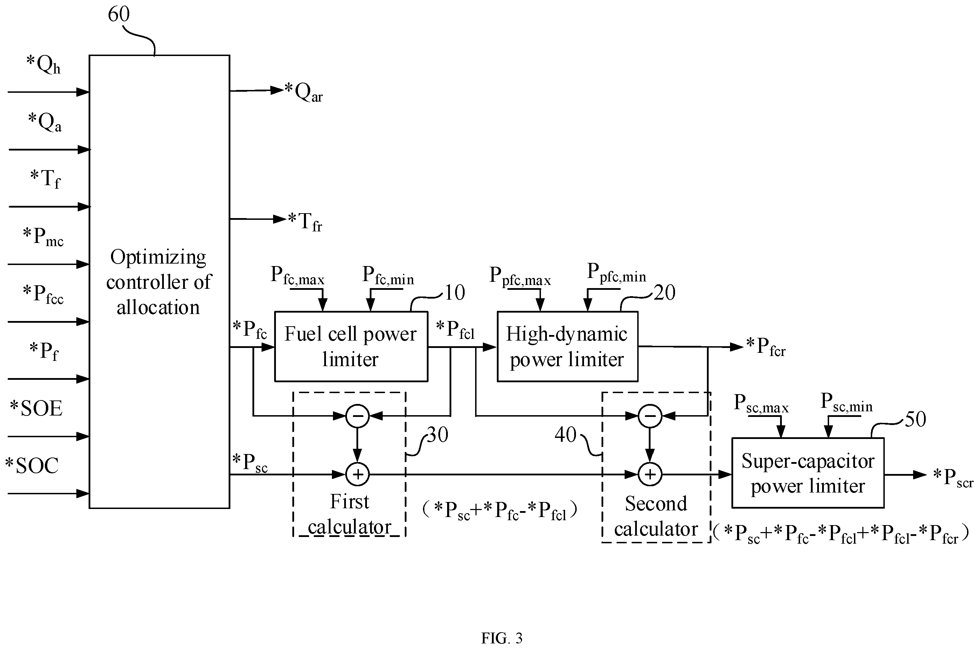

As shown in FIG. 3, the first current output power ^{*}P_{fc}(tₖ) and the previous output power ^{*}P_{fc}(tₖ₋₁) are respectively the output power processed according to the load power and the state of the second energy supplier at a current moment tₖ and a previous moment tₖ₋₁ of the first energy supplier, and are processed using the optimizing controller of allocation 60 shown in FIG. 3 (see Tables 1 to 5 below for specific processing procedures). For example, as shown in FIG. 3, the load power may be the real-time measured input power ^{*}P_{mc} of the motor controller 4, the real-time measured input power ^{*}P_{fcc} of the fuel cell controller 122 and the real-time measured input power ^{*}P_{f} of the furnace controller 114, the first energy supplier may be a PEM fuel cell 121, the second energy supplier may include a super-capacitor 21 and/or a battery 24, and the state of the second energy supplier may include the real-time measured state of energy ^{*}SOE of the super-capacitor 21 and/or the real-time measured state of charge ^{*}SOC of the battery. The state of energy (SOE) refers to the ratio of the current remaining energy (releasable energy) to the rated energy of the super-capacitor, indicating its remaining capacity. The state of charge (SOC) refers to the ratio of the current remaining charge to the rated charge of the battery, indicating its remaining capacity.

Among them, tₖ represents the current moment, tₖ₋₁ represents the previous moment, k≥1 and is a positive integer.

In S200: a current power change rate R_{pfc}(tₖ) of the first energy supplier is obtained according to the first current output power ^{*}P_{fc}(tₖ) and the previous output power ^{*}P_{fc}(tₖ₋₁).

R_{pfc}(tₖ) can be obtained according to the following formula (1):
${R}_{pfc} \left({t}_{k}\right) = \frac{* {P}_{fc} \left({t}_{k}\right) - * {P}_{fc} \left({t}_{k - 1}\right)}{{t}_{k} - {t}_{k - 1}}$

In S300: a first reference power of the first energy supplier is obtained according to the first current output power ^{*}P_{fc}(tₖ), the previous output power ^{*}P_{fc}(tₖ₋₁) and the current power change rate R_{pfc}(tₖ).

As shown in FIG. 3, S300 may include the following contents A1~A5.

In A1: a first preset power threshold of the first energy supplier is obtained.

As shown in FIG. 3, the first preset power threshold may include a first preset power maximum value P_{fc,max} and a first preset power minimum value P_{fc,min}, that is, the first energy supplier normally operates between P_{fc,min} and P_{fc,max}. The first preset power threshold can be set according to the actual operating conditions of the first energy supplier. For example, the first energy supplier may be a PEM fuel cell. When the rated power of the PEM fuel cell is 18kW, P_{fc,min}=7kW, and P_{fc,max}=20kW. When the rated power of the PEM fuel cell is other values, P_{fc,min} and P_{fc,max} may also change. There are no special restrictions here.

In A2: a first current limited power ^{*}P_{fcl}(tₖ) of the first energy supplier is obtained according to the first current output power ^{*}P_{fc}(tₖ) and the first preset power threshold.

As shown in FIG. 3, since ^{*}P_{fc}(tₖ) is an optimized value, it may not be within the first preset threshold range, and it needs to be limited to the first preset threshold range to ensure normal operation.

The first current limited power ^{*}P_{fcl}(tₖ) is obtained according to the fuel cell power limiter 10. If P_{fc,min}≤^{*}P_{fcl}(tₖ)≤P_{fc,max}, then ^{*}P_{fcl}(tₖ)= ^{*}P_{fc}(tₖ); if ^{*}P_{fcl}(tₖ)>P_{fc,max}, then ^{*}P_{fcl}(tₖ)=P_{fc,max}; if ^{*}P_{fcl}(tₖ) is less than P_{fc,min}, then ^{*}P_{fcl}(tₖ)=P_{fc,min}.

In A3: a previous limited power ^{*}P_{fcl}(tₖ₋₁) of the first energy supplier is obtained according to the previous output power ^{*}P_{fc}(tₖ₋₁) and the first preset power threshold.

As shown in FIG. 3, the previous limited power ^{*}P_{fcl}(tₖ₋₁) is obtained according to the fuel cell power limiter 10. If P_{fc,min}≤^{*}P_{fcl}(tₖ₋₁)≤P_{fc,max}, then ^{*}P_{fcl}(tₖ₋₁)=^{*}P_{fc}(tₖ₋₁); if ^{*}P_{fcl}(tₖ₋₁)>P_{fc,max}, then ^{*}P_{fcl}(tₖ₋₁)=P_{fc,max}; if ^{*}P_{fcl}(tₖ₋₁) is less than P_{fc,min}, then ^{*}P_{fcl}(tₖ₋₁)=P_{fc,min}.

In A4: a power change rate threshold of the first energy supplier is obtained.

In the embodiment of the present disclosure, the first energy supplier may include a PEM fuel cell 121 for providing low-dynamic power, and the second energy supplier may include a super-capacitor 21 for providing high-dynamic power. The dynamic power means that the amount of power changes over time. For example, when the change rate of the load power is large (such as a sudden increase in load power), this situation belongs to the high-dynamic power, and the second energy supplier is used preferentially to provide electric energy. When the change rate of the load power is small, that is, the load power is relatively stable, this situation belongs to the low-dynamic power, and the first energy supplier is used preferentially to provide electric energy.

That is to say, the change rate of the output power of the second energy supplier is greater than the change rate of the output power of the first energy supplier. The power change rate threshold of the first energy supplier includes the maximum power change rate R_{pfc,max} and the minimum power change rate R_{pfc,min}. For example, when the rated power of the PEM fuel cell 121 is 30kW, R_{pfc,min} may be -4kW/s, R_{pfc,max} may be 4kW/s. When the current power change rate R_{pfc}(tₖ) of the first energy supplier is between the maximum power change value and the minimum power change value, the output power of the first energy supplier is low-dynamic power. Referring to FIG. 2, the method of the present disclosure enables the PEM fuel cell 121 to provide low-dynamic load demand, the super-capacitor 21 to provide both high-dynamic load demand and low-dynamic load demand, and the battery 24 to provide both high-dynamic load demand and low-dynamic load demand. The change rate of the output power of the PEM fuel cell 121 is limited to a low-dynamic range of R_{pfc,min}~R_{pfc,max}, the power demand beyond this range is allocated to the super-capacitor 21, and the power demand beyond the limited power range of the super-capacitor 21 is allocated to the battery 24, so that each energy supplier can cooperate with each other under different load demand to improve operating efficiency.

In A5: the first reference power is obtained according to the first current limited power ^{*}P_{fcl}(tₖ), the previous limited power ^{*}P_{fcl}(tₖ₋₁), the current power change rate R_{pfc}(tₖ) and the power change rate threshold.

In the embodiment of the present disclosure, A5 may include the following contents B1~B2.

In B1: according to the maximum power change rate R_{pfc,max} and the minimum power change rate R_{pfc,min}, a maximum dynamic power variable ΔP_{fc,max} and a minimum dynamic power variable ΔP_{fc,min} of the first energy supplier are obtained.

In the embodiment of the present disclosure, ΔP_{fc,max}= R_{pfc,max}*(tₖ- tₖ₋₁), P_{fc,min}= R_{pfc,min}* (tₖ- tₖ₋₁).

In B2: according to the current power change rate R_{pfc}(tₖ), the maximum power change rate R_{pfc,max}, the minimum power change rate R_{pfc,min}, the first current limited power ^{*}P_{fcl}(tₖ), the previous limited power ^{*}P_{fcl}(tₖ₋₁), the maximum dynamic power variable ΔP_{fc,max} and the minimum dynamic power variable ΔP_{fc,min}, the first reference power ^{*}P_{fcr} is obtained.

In the embodiment of the present disclosure, in order to obtain the first reference power ^{*}P_{fcr}, B2 may include the following content.

As shown in FIG. 3, the high-dynamic power limiter 20 is used to obtain the first reference power ^{*}P_{fcr}. If R_{pfc,min}≤R_{pfc}(tₖ)≤R_{pfc,max}, then ^{*}P_{fcr}(tₖ)= ^{*}P_{fcl}(tₖ); if R_{pfc}(tₖ)<R_{pfc,min}, then ^{*}P_{fcr}(tₖ)= ^{*}P_{fcl}(tₖ₋₁)+ΔP_{fc,min}; if R_{pfc}(tₖ)>R_{pfc,max}, then ^{*}P_{fcr}(tₖ)= ^{*}P_{fcl}(tₖ₋₁)+ΔP_{fc,max}.

It should be supplemented that ^{*}P_{fcr}(tₖ) is the first reference power obtained at the current moment, ^{*}P_{fcl}(tₖ) is the first current limited power, ^{*}P_{fcl}(tₖ₋₁) is the previous limited power, and the others have the same meaning as above.

In S400: a second current output power ^{*}P_{sc}(tₖ) of a second energy supplier is obtained.

As shown in FIG. 3, the second current output power ^{*}P_{sc}(tₖ) is the output power after being processed according to the load power and the state of the second energy supplier (see Tables 1 to 5 below).

In the embodiment of the present disclosure, the first energy supplier may include a fuel cell (such as the PEM fuel cell 121), the second energy supplier may include a super-capacitor 21 and a battery 24, and the second current output power ^{*}P_{sc}(tₖ) is the current output power of the super-capacitor 21. Then obtaining the first current output power ^{*}P_{fc}(tₖ) of the first energy supplier and obtaining the second current output power ^{*}P_{sc}(tₖ) of the second energy supplier include: obtaining a current load power, a current state of energy of the super-capacitor 21 and a current state of charge of the battery 24; according to the current load power, the current state of energy and the current state of charge, obtaining the first current output power and the second current output power.

Specifically, in the embodiment of the present disclosure, an ammonia-powered PEM fuel cell 121 hybrid electric vehicle is taken as an example. The hybrid electric vehicle includes three modes. The first mode is an idle mode, that is, the motor 3 does not rotate, and the measured input power of the motor controller 4 ^{*}P_{mc}=0; the second mode is a driving mode, that is, the motor 3 rotates, and the measured input power of the motor controller 4 ^{*}P_{mc}> 0; the third mode is a braking mode, in this mode, the motor controller 4 controls the rotor of the motor 3 to decelerate, and the motor 3 can feed back the braking energy to the super-capacitor 21 and the battery 24 through the motor controller 4, ^{*}P_{mc} < 0. Referring to Tables 1 to 3, the first current output power ^{*}P_{fc}(tₖ) of the first power supplier and the second current output power ^{*}P_{sc}(tₖ) of the second power supplier are obtained according to the load power, the state of energy ^{*}SOE of the super-capacitor 21, and the state of charge ^{*}SOC of the battery.

**Table 1 ^{*}P_{mc}=0 (idle mode)**

| Condition | Result |
|---|---|
| If ^{*}SOE =high & ^{*}SOC =high | ^{*}P_{fc}=P_{fc,min}, ^{*}P_{sc}=^{*}P_{ad}-^{*}P_{fc} |
| If ^{*}SOE =medium & ^{*}SOC =high | ^{*}P_{fc}=P_{fc,opt}, ^{*}P_{sc}=-(^{*}P_{fc}-^{*}P_{ad}) |
| If ^{*}SOE =low & ^{*}SOC =high | If (^{*}P_{ad}-P_{sc,min})≤P_{fc,max}, then ^{*}P_{sc}=P_{sc,min}, ^{*}P_{fc}=^{*}P_{ad}-^{*}P_{sc}; otherwise, ^{*}P_{fc}=P_{fc,max}, ^{*}P_{sc}=-(^{*}P_{fc}-^{*}P_{ad}) |
| If ^{*}SOE =high & ^{*}SOC =medium | ^{*}P_{fc}=P_{fc,opt}, ^{*}P_{sc}=0 |
| If ^{*}SOE =medium & ^{*}SOC =medium | ^{*}P_{fc}=P_{fc,opt}, ^{*}P_{sc}=0 |
| If ^{*}SOE =low & ^{*}SOC =medium | ^{*}P_{fc}=P_{fc,max}, |
| | If -(^{*}P_{fc}-^{*}P_{ad})≤P_{sc,min}, then ^{*}P_{sc}=-(^{*}P_{fc}-^{*}P_{ad}); otherwise, ^{*}P_{sc}=P_{sc,min} |
| If ^{*}SOE =high & ^{*}SOC =low | ^{*}P_{fc}=P_{fc,max}, ^{*}P_{sc}=0 |
| If ^{*}SOE =medium & ^{*}SOC =low | ^{*}P_{fc}=P_{fc,max}, ^{*}P_{sc}=0 |
| If ^{*}SOE =low & ^{*}SOC =low | ^{*}P_{fc}=P_{fc,max}, ^{*}P_{sc}=0 |

Among them, ^{*}P_{ad}=^{*}P_{fcc}+^{*}P_{f}, that is, ^{*}P_{ad} represents the sum of the real-time measured input power ^{*}P_{fcc} of the fuel cell controller 122 and the real-time measured input power ^{*}P_{f} of the furnace controller 114, which is the load power in the idle mode. ^{*}SOE has three states: high, medium and low, and ^{*}SOC also has three states: high, medium and low (the description at the bottom of Table 4 and Table 5 may be referred to). The negative sign indicates input or charging, for example, in ^{*}P_{sc}=-(^{*}P_{fc}-^{*}P_{ad}) in the second row of Table 1, the negative sign in front indicates the power allocated to the super-capacitor 21, that is, charging the super-capacitor 21.

For the sake of brevity, only part of the content in Table 1 is explained. In the first row, ^{*}SOE =high & ^{*}SOC =high, then the output power ^{*}P_{fc} of the PEM fuel cell is P_{f,min}, that is, the output power is the minimum. If the load power ^{*}P_{ad} is greater than ^{*}P_{fc}, the output power ^{*}P_{sc} of the super-capacitor 21 is adjusted to a difference between the two to discharge the super-capacitor 21. In the second row, ^{*}SOE =medium & ^{*}SOC = high, then the output power ^{*}P_{fc} of the PEM fuel cell is adjusted to P_{fc,opt}. P_{fc,opt} represents the output power of the fuel cell at its highest operating efficiency. At this time, ^{*}P_{fc} is greater than the load power ^{*}P_{ad}, and the remaining power of the PEM fuel cell 121 is used to charge the super-capacitor 21, so ^{*}P_{sc}=-(^{*}P_{fc}-^{*}P_{ad}).

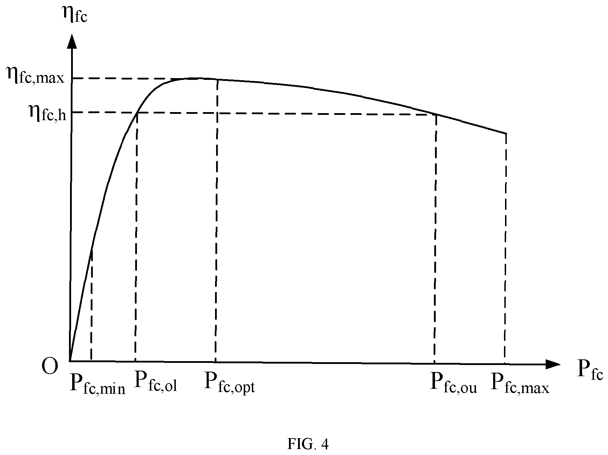

As shown in FIG. 4, the abscissa represents the output power of the fuel cell, and the ordinate represents the operating efficiency of the fuel cell. When the output power is P_{fc,opt}, the operating efficiency is η_{fc,max}, which represents the highest operating efficiency. η_{fc,h} represents the lower limit of high operating efficiency, which may be 90% of η_{fc,max}, for example. Depending on the load demand, the SOE of the super-capacitor 21 and the SOC of the battery, the output power of the PEM fuel cell 121 can be allocated to [P_{fc,ol}, P_{fc,ou}], or [P_{fc,min}, P_{fc,ol}], or [P_{fc,ou}, P_{fc,max}], and the highest efficiency operation, the high efficiency operation and the operating efficiency as high as possible are obtained respectively.

In the fourth row of Table 1, ^{*}SOE = high & ^{*}SOC = medium, then the output power ^{*}P_{fc} of the PEM fuel cell is adjusted to P_{fc,opt}, and the output power of the super-capacitor 21 ^{*}P_{sc}=0, then after providing power to the load, the remaining power of the PEM fuel cell charges the battery 24.

The electric power of the present disclosure is jointly provided by the PEM fuel cell 121, the super-capacitor 21 and the battery 24. If the output power of the PEM fuel cell 121 and the super-capacitor 21 (i.e., the output power adjusted by the power conditioner 123 and the power converter 23) changes, the output power of the battery 24 will automatically change to adapt to the new electrical power balance.

**Table 2 ^{*}P_{mc}>0 (driving mode)**

| Condition | Result |
|---|---|
| If ^{*}SOE =high & ^{*}SOC=high & P_{fc,min}≤(^{*}P_{mc}+^{*}P_{ad})≤P_{fc,max} | ^{*}P_{fc}=(^{*}P_{mc}+^{*}P_{ad}), ^{*}P_{sc}=0 |
| If ^{*}SOE =high & ^{*}SOC =high & P_{fc,max}< (^{*}P_{mc}+*P_{ad}) | ^{*}P_{fc}=P_{fc,max}; |
| | if ((^{*}P_{mc}+^{*}P_{ad})-^{*}P_{fc})≤P_{sc,max}, then ^{*}P_{sc}=(^{*}P_{mc}+^{*}P_{ad})-^{*}P_{fc}; otherwise, ^{*}P_{sc}=P_{sc,max} |
| If ^{*}SOE =medium & ^{*}SOC =high & (^{*}P_{mc}+^{*}P_{ad}) < P_{fc,opt} | ^{*}P_{fc}=P_{fc,opt}, ^{*}P_{sc}=-(^{*}P_{fc}-(^{*}P_{mc}+^{*}P_{ad})) |
| If ^{*}SOE=medium & ^{*}SOC=high & P_{fc,opt}≤ (^{*}P_{mc}+^{*}P_{ad}) ≤ P_{fc,max} | ^{*}P_{fc}=^{*}P_{mc}+^{*}P_{ad}, ^{*}P_{sc}=0 |
| If ^{*}SOE =medium & ^{*}SOC =high & P_{fc,max} < (^{*}P_{mc}+^{*}P_{ad}) | ^{*}P_{fc}=P_{fc,max}, ^{*}P_{sc}=0 |
| If ^{*}SOE =low & ^{*}SOC =high & (^{*}P_{mc}+^{*}P_{ad}) < P_{fc,max} | If (^{*}P_{mc}+^{*}P_{ad}-P_{sc,min})≤P_{fc,max}, then ^{*}P_{sc}=P_{s,min}, ^{*}P_{fc}=^{*}P_{mc}+^{*}P_{ad}-^{*}P_{sc}; otherwise, ^{*}P_{fc}=P_{fc,max}, ^{*}P_{sc}=-(^{*}P_{fc}-(^{*}P_{mc}+^{*}P_{ad})) |
| If ^{*}SOE =low & ^{*}SOC =high & P_{fc,max} ≤ (^{*}P_{mc}+^{*}P_{ad}) | ^{*}P_{fc}=P_{fc,max}, ^{*}P_{sc}=0 |
| If ^{*}SOE =high & ^{*}SOC =medium & (^{*}P_{mc}+^{*}P_{ad}) < P_{fc,opt} | ^{*}P_{fc}=P_{fc,opt}, ^{*}P_{sc}=0 |
| If ^{*}SOE = high & ^{*}SOC = medium & P_{fc,opt}≤ (^{*}P_{mc}+^{*}P_{ad})≤ P_{fc,max} | ^{*}P_{fc}=(^{*}P_{mc}+^{*}P_{ad}), ^{*}P_{sc}=0 |
| If "SOE=high & ^{*}SOC =medium & P_{fc,max} < (^{*}P_{mc}+^{*}P_{ad}) | ^{*}P_{fc}=P_{fc,max}; |
| | if P_{sc,max}≥(^{*}P_{mc}+^{*}P_{ad})-^{*}P_{fc}, then ^{*}P_{sc}=(^{*}P_{mc}+^{*}P_{ad})-^{*}P_{fc}; otherwise, ^{*}P_{sc}=P_{sc,max} |
| If ^{*}SOE =medium & ^{*}SOC=medium & (^{*}P_{mc}+^{*}P_{ad}) < P_{fc,opt} | ^{*}P_{fc}=P_{fc,opt}; |
| | if P_{sc,min}≤-(^{*}P_{fc}-(^{*}P_{mc}+^{*}P_{ad})), then ^{*}P_{sc}=-(^{*}P_{fc}-(^{*}P_{mc}+^{*}P_{ad})); otherwise^{*}P_{sc}=P_{sc,min} |
| If ^{*}SOE =medium & ^{*}SOC=medium & P_{fc,opt}≤ (^{*}P_{mc}+^{*}P_{ad}) ≤ P_{fc,max} | ^{*}P_{fc}=^{*}P_{mc}+^{*}P_{ad}, ^{*}P_{sc}=0 |
| If ^{*}SOE =medium & ^{*}SOC =medium & P_{fc,max} < (^{*}P_{mc}+^{*}P_{ad}) | ^{*}P_{fc}=P_{fc,max}; |
| | if P_{sc,max}≥(^{*}P_{mc}+^{*}P_{ad})-^{*}P_{fc}, then ^{*}P_{sc}=(^{*}P_{mc}+^{*}P_{ad})-^{*}P_{fc}; |
| | otherwise^{*}P_{sc}=P_{sc,max} |
| If ^{*}SOE =low & ^{*}SOC =medium & (^{*}P_{mc}+^{*}P_{ad}) < P_{fc,max} | ^{*}P_{fc}=P_{fc,max}; |
| | if P_{sc,min}≤-(^{*}P_{fc}-(^{*}P_{mc}+^{*}P_{ad})), then ^{*}P_{sc}=-(^{*}P_{fc}-(^{*}P_{mc}+^{*}P_{ad})); otherwise^{*}P_{sc}=P_{sc,min} |
| If ^{*}SOE =low & ^{*}SOC=medium & P_{fc,max} ≤ (^{*}P_{mc}+^{*}P_{ad}) | ^{*}P_{fc}=P_{fc,max}, ^{*}P_{sc}=0 |
| If ^{*}SOE =high & ^{*}SOC =low & (^{*}P_{mc}+^{*}P_{ad}) < P_{fc,max} | ^{*}P_{fc}=P_{fc,max}, ^{*}P_{sc}=0 |
| If "SOE =high& ^{*}SOC =low & P_{fc,max} ≤ (^{*}P_{mc}+^{*}P_{ad}) | ^{*}P_{fc}=P_{fc,max}; |
| | if P_{sc,max}≥(^{*}P_{mc}+^{*}P_{ad})-^{*}P_{fc}, then ^{*}P_{sc}=(^{*}P_{mc}+^{*}P_{ad})-^{*}P_{fc}; |
| | otherwise^{*}P_{sc}=P_{sc,max} |
| If ^{*}SOE =medium & ^{*}SOC =low & (^{*}P_{mc}+^{*}P_{ad}) < P_{fc,max} | ^{*}P_{fc}=P_{fc,max}, ^{*}P_{sc}=0 |
| If ^{*}SOE =medium & ^{*}SOC =low & P_{fc,max}≤ (^{*}P_{mc}+^{*}P_{ad}) | ^{*}P_{fc}=P_{fc,max}; |
| | if P_{sc,max}≥(^{*}P_{mc}+^{*}P_{ad})-^{*}P_{fc}, then ^{*}P_{sc}=(^{*}P_{mc}+^{*}P_{ad})-^{*}P_{fc}; |
| | otherwise^{*}P_{sc}=P_{sc,max} |
| If ^{*}SOE =low & ^{*}SOC =low | ^{*}P_{fc}=P_{fc,max},^{*}P_{sc}=0 |

In Table 2, *P_{mc}+*P_{ad} represents the real-time measured load power in the driving mode. From the above content, it can be seen that P_{fc,max} is the first preset power maximum value, that is, the maximum output power of the PEM fuel cell 121. P_{fc,min} is the first preset power minimum value, that is, the minimum output power of the PEM fuel cell 121, which is used to maintain the idle operation of the PEM fuel cell 121.

For the sake of brevity, only part of the content in Table 2 is explained. In the first row, ^{*}SOE = high & ^{*}SOC =high & P_{fc,min}≤(^{*}P_{mc}+^{*}P_{ad})≤P_{fc,max}, then the output power of the PEM fuel cell ^{*}P_{fc} is ^{*}P_{mc}+^{*}P_{ad}, and the output power of the super-capacitor ^{*}P_{sc} is 0, that is, the load power is within the first preset power threshold range, and the load power is provided by the PEM fuel cell. After the PEM fuel cell provides power to the load, the remaining power is used to charge the battery 24.

In the fifth row, ^{*}SOE = medium & ^{*}SOC =high & P_{fc,max} < (^{*}P_{mc}+^{*}P_{ad}), then ^{*}P_{fc}=P_{fc,max}, ^{*}P_{sc}=0, that is, the load power is greater than P_{fc,max}, and the output power of the PEM fuel cell is P_{fc,max}. If the output power of the PEM fuel cell still cannot meet the load power, the remaining load power is provided by the battery (because the ^{*}SOC of the battery is high and the ^{*}SOE of the super-capacitor is medium).

**Table 3 ^{*}P_{mc} < 0 (braking mode)**

| Condition | Result |
|---|---|
| If ^{*}SOE =high & ^{*}SOC =high & 0 ≤ (^{*}P_{mc}+^{*}P_{ad}) ≤ P_{fc,min} | ^{*}P_{fc}=P_{fc,min}, ^{*}P_{sc}=0 |
| If ^{*}SOE =high & ^{*}SOC =high & P_{fc,min} < (^{*}P_{mc}+^{*}P_{ad}) | ^{*}P_{fc}=(^{*}P_{mc}+^{*}P_{ad}), ^{*}P_{sc}=0 |
| If ^{*}SOE =high & ^{*}SOC =high & (^{*}P_{mc}+^{*}P_{ad}) < 0 | ^{*}P_{fc}=P_{fc,min}, ^{*}P_{sc}=0 |
| If ^{*}SOE =medium & ^{*}SOC =high & 0≤(^{*}P_{mc}+^{*}P_{ad}) < P_{fc,min} | ^{*}P_{fc}=P_{fc,min}, ^{*}P_{sc}=-(^{*}P_{fc}- (^{*}P_{mc}+^{*}P_{ad})) |
| If ^{*}SOE =medium & ^{*}SOC=high & P_{fc,min}≤ (^{*}P_{mc}+^{*}P_{ad}) < P_{fc,opt} | ^{*}P_{fc}=P_{fc,min}, ^{*}P_{sc}=0 |
| If ^{*}SOE=medium & ^{*}SOC=high & P_{fc,opt} ≤ (^{*}P_{mc}+^{*}P_{ad}) < P_{fc,max} | ^{*}P_{fc}=P_{fc,opt}, ^{*}P_{sc}=0 |
| If ^{*}SOE =medium & ^{*}SOC=high & (^{*}P_{mc}+^{*}P_{ad}) < 0 | ^{*}P_{fc}=P_{fc,min}, |
| | if P_{sc,min}≤(-^{*}P_{fc}+(^{*}P_{mc}+^{*}P_{ad})), then ^{*}P_{sc}=(^{*}P_{mc}+^{*}P_{ad})-^{*}P_{fc}; |
| | otherwise,^{*}P_{sc}=P_{sc,min} |
| If ^{*}SOE =low & ^{*}SOC=high & 0≤(^{*}P_{mc}+^{*}P_{ad}) | ^{*}P_{fc}=P_{fc,max}; |
| | if ^{*}P_{fc}≥P_{sc,min}, then ^{*}P_{sc}=-^{*}P_{fc}; otherwise, ^{*}P_{sc}=P_{sc,min} |
| If ^{*}SOE=low & ^{*}SOC=high & (^{*}P_{mc}+^{*}P_{ad}) < 0 | If P_{fc,min}≤((^{*}P_{mc}+^{*}P_{ad})-P_{sc,min})≤P_{fc,max}, then ^{*}P_{sc}=P_{sc,min}, ^{*}P_{fc}=(^{*}P_{mc}+^{*}P_{ad})-P_{sc,min}; |
| | otherwise if ((^{*}P_{mc}+^{*}P_{ad})-P_{sc,min})<P_{fc,min}, then ^{*}P_{fc}=P_{fc,min}, ^{*}P_{sc}=P_{sc,min}; |
| | otherwise if ((^{*}P_{mc}+^{*}P_{ad})-P_{sc,min})>P_{fc,max}, then ^{*}P_{fc}=P_{fc,max}, ^{*}P_{sc}=((^{*}P_{mc}+^{*}P_{ad})-^{*}P_{fc} |
| If ^{*}SOE=high & ^{*}SOC=medium & 0≤ (^{*}P_{mc}+^{*}P_{ad})< P_{fc,min} | ^{*}P_{fc}=P_{fc,min}, ^{*}P_{sc}=0 |
| If ^{*}SOE=high & ^{*}SOC=medium & P_{fc,min}≤(^{*}P_{mc}+^{*}P_{ad})<P_{fc,opt} | ^{*}P_{fc}=P_{fc,min}, ^{*}P_{sc}=^{*}P_{mc}+^{*}P_{ad} -^{*}P_{fc} |
| If ^{*}SOE =high & ^{*}SOC=medium & P_{fc,opt}≤(^{*}P_{mc}+^{*}P_{ad}) < P_{fc,max} | ^{*}P_{fc}=P_{fc,opt}, ^{*}P_{sc}=^{*}P_{mc}+^{*}P_{ad} -^{*}P_{fc} |
| If ^{*}SOE =high & ^{*}SOC =medium & (^{*}P_{mc}+^{*}P_{ad}) < 0 | ^{*}P_{fc}=P_{fc,opt}, ^{*}P_{sc}=0 |
| If ^{*}SOE =medium & ^{*}SOC=medium & 0 ≤ (^{*}P_{mc}+^{*}P_{ad}) < P_{fc,opt} | ^{*}P_{fc}=P_{fc,opt}, ^{*}P_{sc}=-(^{*}P_{fc}-(^{*}P_{mc}+^{*}P_{ad})) |
| If ^{*}SOE =medium & ^{*}SOC=medium & P_{fc,opt}≤(^{*}P_{mc}+^{*}P_{ad}) < P_{fc,max} | ^{*}P_{fc}=^{*}P_{mc}+^{*}P_{ad}, ^{*}P_{sc}=0 |
| If ^{*}SOE =medium & ^{*}SOC=medium & (^{*}P_{mc}+^{*}P_{ad}) < 0 | ^{*}P_{fc}=P_{fc,opt}, |
| | if (-^{*}P_{fc}+(^{*}P_{mc}+^{*}P_{ad})) ≥ P_{sc,min}, then ^{*}P_{sc}=(^{*}P_{mc}+^{*}P_{ad})-^{*}P_{fc}; otherwise, ^{*}P_{sc}=P_{sc,min} |
| If ^{*}SOE =low & ^{*}SOC =medium & 0≤ (^{*}P_{mc}+^{*}P_{ad}) | ^{*}P_{fc}=P_{fc,max} |
| | if -(^{*}P_{fc}-(^{*}P_{mc}+^{*}P_{ad}))≥P_{sc,min}, then ^{*}P_{sc}=-(^{*}P_{fc}-(^{*}P_{mc}+^{*}P_{ad})); otherwise, P_{sc}=P_{sc,min} |
| If ^{*}SOE=low & ^{*}SOC=medium & (^{*}P_{mc}+^{*}P_{ad}) < 0 | If P_{fc,min} ≤ ((^{*}P_{mc}+^{*}P_{ad})-P_{sc,min})≤ P_{fc,max}, then ^{*}P_{fc}=(^{*}P_{mc}+^{*}P_{ad})-P_{sc,min}, ^{*}P_{sc}=P_{sc,min}; |
| | otherwise if ((^{*}P_{mc}+^{*}P_{ad})-P_{sc,min})<P_{fc,min}, then ^{*}P_{fc}=P_{fc,min}, ^{*}P_{sc}=P_{sc,min}; |
| | otherwise if ((^{*}P_{mc}+^{*}P_{ad})-P_{sc,min})>P_{fc,max}, then ^{*}P_{fc}=P_{fc,max}, ^{*}P_{sc}=((^{*}P_{mc}+^{*}P_{ad})-^{*}P_{fc} |
| If ^{*}SOE =high & ^{*}SOC =low & (^{*}P_{mc}+^{*}P_{ad}) ≥0 | ^{*}P_{fc}=P_{fc,max}, ^{*}P_{sc}=^{*}P_{mc}+^{*}P_{ad} |
| If ^{*}SOE =high & ^{*}SOC =low & (^{*}P_{mc}+^{*}P_{ad}) <0 | ^{*}P_{fc}=P_{fc,max}, ^{*}P_{sc}=0 |
| If ^{*}SOE =medium & ^{*}SOC =low & (^{*}P_{mc}+^{*}P_{ad}) ≥0 | ^{*}P_{fc}=P_{fc,max}, ^{*}P_{sc}=0 |
| If ^{*}SOE =medium & ^{*}SOC =low & (^{*}P_{mc}+^{*}P_{ad}) <0 | ^{*}P_{fc}=P_{fc,max}, ^{*}P_{sc}=0 |
| If ^{*}SOE =low & ^{*}SOC =low | ^{*}P_{fc}=P_{fc,max}, ^{*}P_{sc}=0 |

Among them, (*P_{mc}+*P_{ad})<0 means that under braking, the electric energy converted by the braking energy of the motor 3 through the motor controller 4 is greater than the electric energy required by the load, that is, the motor controller 4 is equivalent to an energy supply device at this time, as opposed to the output power of the power supplier.

In the first row, ^{*}SOE =high, ^{*}SOC =high, 0≤(^{*}P_{mc}+^{*}P_{ad}) ≤ P_{fc,min}, that is, the load power is positive and less than the first preset power minimum value, the output power of the PEM fuel cell 121 is adjusted to P_{fc,min}. At this time, the super-capacitor 21 does not need to be charged, so ^{*}P_{sc}=0, and the remaining power of the PEM fuel cell 121 charges the battery 24. Although the ^{*}SOC of the battery 24 is high, since the capacity of the battery 24 is larger, the remaining energy can be used to charge the battery 24.

In the fifth row from the bottom, ^{*}SOE =high & ^{*}SOC =low & (^{*}P_{mc}+^{*}P_{ad}) ≥0, since ^{*}SOC is low, the output power ^{*}P_{fc} of the PEM fuel cell is adjusted to P_{fc,max}, and the output power of the super-capacitor 21 is *P_{mc}+*P_{ad}, that is, the super-capacitor 21 provides electric energy to the load, and the PEM fuel cell charges the battery 24.

In the embodiment of the present disclosure, Table 4 is for the obtaining of the state of charge (SOC) of the battery 24, and Table 5 is for the obtaining of the state of energy (SOE) of the super-capacitor 21.

**Table 4 Obtaining of the SOC of the battery**

| Condition | Result |
|---|---|
| If ^{*}SOC(tₖ) >SOCₘₐₓ | SOC=high |
| If SOCₙᵤ<^{*}SOC(tₖ)≤SOCₘₐₓ &^{*}SOC(tₖ)<^{*}SOC (tₖ₋₁) | |
| If SOCₙₗ≤^{*}SOC(tₖ) ≤ SOCₙᵤ | SOC=medium |
| If SOCₘᵢₙ≤^{*}SOC(tₖ) < SOCₙₗ & ^{*}SOC(tₖ) < ^{*}SOC (tₖ₋₁) | |
| If SOCₙᵤ<^{*}SOC(tₖ)≤SOCₘₐₓ & ^{*}SOC(tₖ)>^{*}SOC(tₖ₋₁) | |
| If ^{*}SOC(tₖ)<SOCₘᵢₙ | SOC=low |
| If SOCₘᵢₙ≤^{*}SOC(tₖ) < SOCₙₗ & ^{*}SOC(tₖ)>^{*}SOC (tₖ₋₁) | |
| If ^{*}SOC(tₖ) =^{*}SOC(tₖ₋₁) | There is no change in level |

When the state of charge (SOC) of the battery 24 is medium, the SOC is within [SOCₙₗ, SOCₙᵤ], SOCₙₗ represents the lower limit when the SOC is "medium", and SOCₙᵤ represents the upper limit when the SOC is "medium". When the SOC is within [SOCₙₗ, SOCₙᵤ], the battery 24 can be protected from aging or performance degradation, the battery 24 can be kept running efficiently, and the battery 24 can be charged or discharged. When the SOC is within [SOCₘᵢₙ, SOCₙₗ], it means that the SOC is "low" and the battery needs to be charged. SOCₘᵢₙ means the lower limit when the SOC is "low". When the SOC is in within [SOCₙᵤ, SOCₘₐₓ], it means that the SOC is "high" and the battery needs to be discharged. SOCₘₐₓ means the upper limit when the SOC is "high". The values of SOCₘᵢₙ, SOCₙₗ, SOCₙᵤ, and SOCₘₐₓ can be set according to the model of the battery 24. For example, when the battery 24 is a lithium-ion battery, SOCₘᵢₙ may be 20%, SOCₙₗ may be 55%, SOCₙᵤ may be 85%, and SOCₘₐₓ may be 100 %, there are no special restrictions here.

**Table 5 Obtaining of the SOE of the super-capacitor 21**

| Condition | Result |
|---|---|
| If ^{*}SOE(tₖ)>SOEₘₐₓ | SOE=high |
| If SOEₙᵤ<^{*}SOE(tₖ)≤SOEₘₐₓ &^{*}SOE(tₖ)<^{*}SOE (tₖ₋₁) | |
| If SOEₙₗ≤^{*}SOE(tₖ) ≤ SOEₙᵤ | SOE=medium |
| If SOEₘᵢₙ≤^{*}SOE(tₖ)<SOEₙₗ &^{*}SOE(tₖ)<^{*}SOE (tₖ₋₁) | |
| If SOEₙᵤ<^{*}SOE(tₖ)≤SOEₘₐₓ &^{*}SOE(tₖ)>^{*}SOE(tₖ₋₁) | |
| If ^{*}SOE(tₖ)<SOEₘᵢₙ | SOE=low |
| If SOEₘᵢₙ≤^{*}SOE(tₖ)<SOEₙₗ &^{*}SOE(tₖ)>^{*}SOE(tₖ₋₁) | |
| If ^{*}SOE(tₖ)=^{*}SOE(tₖ₋₁) | There is no change in level |

Among them, when the state of energy (SOE) of the super-capacitor 21 is medium, the SOE is within [SOEₙₗ, SOEₙᵤ], that is, SOEₙₗ represents the lower limit when the SOE is "medium", and SOEₙᵤ represents the upper limit when the SOE is "medium". When the SOE is within [SOEₙₗ, SOEₙᵤ], the super-capacitor 21 can be protected from aging or performance degradation, the super-capacitor 21 can be kept running efficiently, and the super-capacitor 21 can be charged or discharged. When SOE is within [SOEₘᵢₙ, SOEₙₗ], it means that SOE is "low" and the super-capacitor 21 needs to be charged. SOEₘᵢₙ means the lower limit when SOE is "low". When SOE is within [SOEₙᵤ, SOEₘₐₓ], it means that SOE is "high" and the super-capacitor 21 needs to be discharged. SOEₘₐₓ means the upper limit when SOE is "high". The values of SOEₘᵢₙ, SOEₙₗ, SOEₙᵤ, and SOEₘₐₓ can be set according to the model of the super-capacitor 21. For example, when the super-capacitor 21 is an electric double layer capacitor (EDLC), SOEₘᵢₙ may be 30%, SOEₙₗ may be 45%, SOEₙᵤ may be 90 %, SOEₘₐₓ may be 100%, there is no special restrictions here.

The conditions in Table 4 and Table 5 can be determined according to the hysteresis control algorithm to make SOC/SOE change smoothly, which can be obtained by those skilled in the art according to the related art, and will not be described again here.

In S500: a second reference power ^{*}P_{scr}(tₖ) of the second energy supplier is obtained according to the first current output power ^{*}P_{fc}(tₖ), the second current output power ^{*}P_{sc}(tₖ) and the first reference power ^{*}P_{fcr}(tₖ).

In the embodiment of the present disclosure, S500 may include: obtaining a second preset power threshold of the second energy supplier; obtaining the second reference power ^{*}P_{scr}(tₖ) according to the first current output power ^{*}P_{fc}(tₖ), the second current output power ^{*}P_{sc}(tₖ), the first reference Power ^{*}P_{fcr}(tₖ) and the second preset power threshold.

As shown in FIG. 3, the load power and the ^{*}SOE of the super-capacitor 21 and the ^{*}SOC of the battery 24 are measured in real time, and the optimizing controller of allocation 60 is used to obtain the first current output power ^{*}P_{fc}(tₖ) according to the above table and obtain the first current limited power ^{*}P_{fcl}(tₖ). If ^{*}P_{fc}(tₖ) is not equal to ^{*}P_{fcl}(tₖ), the first calculator 30 in FIG. 3 is used to calculate a difference between ^{*}P_{fc}(tₖ) and ^{*}P_{fcl}(tₖ), and the difference and the second current output power ^{*}P_{sc}(tₖ) of the second energy supplier are summed, that is, ^{*}P_{sc}(tₖ)+^{*}P_{fc}(tₖ)- ^{*}P_{fcl}(tₖ), and the remaining power of the first energy supplier (PEM fuel cell 121) is allocated to the second energy supplier (super-capacitor 21).

After obtaining the first reference power ^{*}P_{fcr}(tₖ) using the high-dynamic power limiter 20, if ^{*}P_{fcr}(tₖ) is not equal to ^{*}P_{fcl}(tₖ), the second calculator 40 is used to calculate a difference between ^{*}P_{fcl}(tₖ) and ^{*}P_{fcr}(tₖ), and the difference and ^{*}P_{sc}(tₖ)+^{*}P_{fc}(tₖ)-^{*}P_{fcl}(tₖ) are summed to obtain the output power of the second energy supplier after allocation, that is, ^{*}P_{sc}(tₖ)+^{*}P_{fc}(tₖ)-^{*}P_{fcl}(tₖ)+^{*}P_{fcl}(tₖ)-^{*}P_{fcr}(tₖ)= ^{*}P_{sc}(tₖ)+^{*}P_{fc}(tₖ) - ^{*}P_{fcr}(tₖ).

The second preset power threshold of the second energy supplier is obtained. The second preset power threshold may include a second preset power maximum value P_{sc,max} and a second preset power minimum value P_{sc,min}, that is, the second energy supplier operates normally when the output power is between P_{sc,max} andP_{sc,min}.

As shown in FIG. 3, the super-capacitor limiter 50 is used to obtain the current second reference power ^{*}P_{scr}(tₖ). Specifically, after obtaining the output power ^{*}P_{sc}(tₖ)+^{*}P_{fc}(tₖ)-^{*}P_{fcr}(tₖ) of the second energy supplier after allocation, if P_{sc,min}≤^{*}P_{sc}(tₖ)+^{*}P_{fc}(tₖ)-^{*}P_{fcr}(tₖ)≤P_{sc,max}, then ^{*}P_{scr}(tₖ)= ^{*}P_{sc}(tₖ)+^{*}P_{fc}(tₖ)- ^{*}P_{fcr}(tₖ); if ^{*}P_{sc}(tₖ)+^{*}P_{fc}(tₖ)-^{*}P_{fcr}(tₖ) > P_{sc,max}, then ^{*}P_{scr}(tₖ)= P_{sc,max}; if ^{*}P_{sc}(tₖ)+^{*}P_{fc}(tₖ) - ^{*}P_{fcr}(tₖ)<P_{sc,min}, then ^{*}P_{scr}(tₖ)= P_{sc,min}.

Through the above management, the first energy supplier maintains high-efficiency operation in the low-dynamic power range, and the remaining power of the first energy supplier is allocated to the second energy supplier, so that the second energy supplier operates within the normal range, for example, the SOE of the super-capacitor 21 and the SOC of the battery 24 are kept within a normal range, thereby avoiding aging or performance degradation of the super-capacitor 21 and the battery 24, and maintaining high-efficiency operation. Furthermore, the second energy supplier is able to operate efficiently in a high-dynamic power range.

After obtaining the first reference power and the second reference power, the energy management system 900 may feed back the first reference power to the power conditioner 123 and feed back the second reference power to the power converter 23, so that they can output the specified power respectively.

In S600: the current flow rate ^{*}Qₐ of the first gas, the current flow rate ^{*}Qₕ of the second gas, and the current furnace temperature ^{*}T_{f} are obtained.

In the embodiment of the present disclosure, referring to FIG. 2, the gas conversion device 11 is connected to the first energy supplier (PEM fuel cell). The gas conversion device 11 is used to convert the first gas into the second gas, and the second gas is used for the fuel cell 121 to generate electricity. As shown in FIG. 2, the current furnace temperature ^{*}T_{f} is the current temperature of the furnace 113 in the gas conversion device 11 and is measured by the furnace controller 114. As shown in FIG. 3, ^{*}Qₐ is the ammonia flow rate measured in real time, and ^{*}Qₕ is the hydrogen flow rate measured in real time. The first gas may be ammonia, and the second gas may be hydrogen.

In S700: according to the current flow rate ^{*}Qₐ of the first gas, the current flow rate ^{*}Qₕ of the second gas, and the current furnace temperature ^{*}T_{f}, the reference flow rate ^{*}Qₐᵣ of the first gas and the reference furnace temperature ^{*}T_{fr} are obtained.

S700 is designed to keep the flow rate Qₕ of the second gas (hydrogen) stable and reduce the furnace temperature as much as possible to save energy consumption. S700 may include the following contents C1~C3.

In C1: if the current furnace temperature ^{*}T_{f} minus one preset furnace temperature step size Hₜ is greater than the minimum preset furnace temperature T_{fl}, the current flow rate ^{*}Qₐ of the first gas is regulated to ^{*}Qₐᵣ to maintain the current flow rate of the second gas to be stable; if the regulated flow rate ^{*}Qₐᵣ of the first gas is within a preset range, the furnace temperature is continuously reduced according to the preset temperature step size to no less than the minimum preset furnace temperature, and the flow rate ^{*}Qₐᵣ of the first gas is continued to be regulated to maintain the current flow rate ^{*}Qₕ of the second gas to be stable.

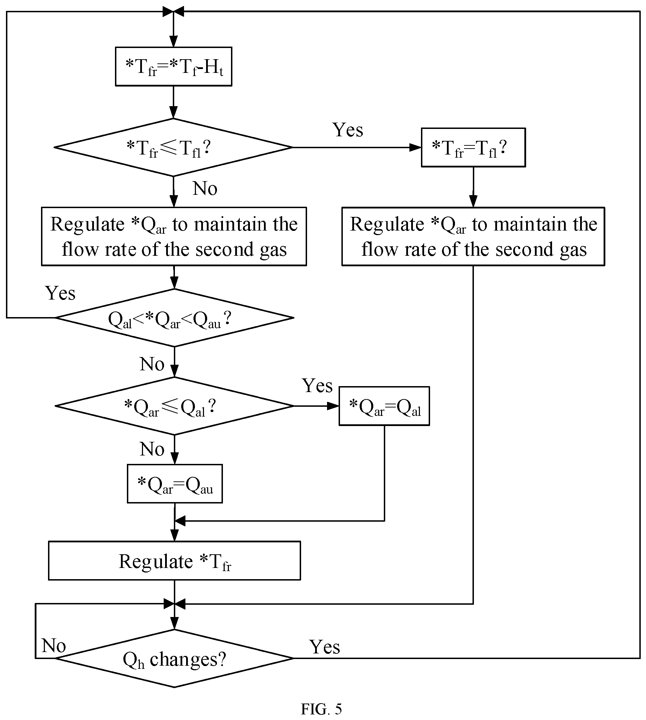

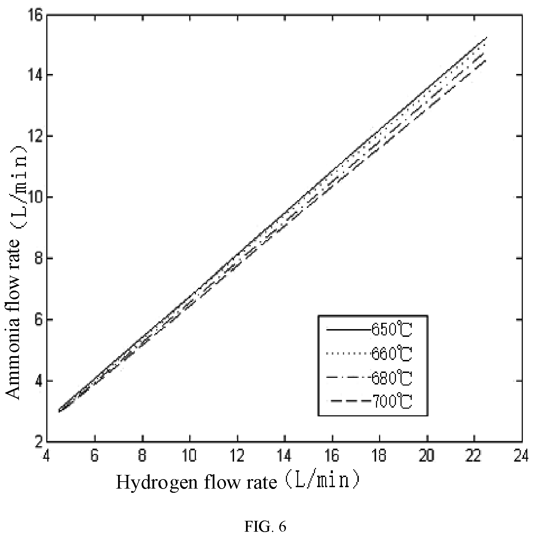

As shown in FIG. 5, the minimum preset furnace temperature T_{fl} is the lower limit of the temperature at which the second gas (hydrogen) can be normally produced. The preset range of the flow rate of the first gas is [Qₐₗ, Qₐᵤ], the preset temperature step size is Hₜ, and Hₜ may be 0.5°C. Referring to FIG. 6, a schematic diagram of the relationship among ammonia, hydrogen and the furnace temperature is shown. From this, it can be seen that the hydrogen flow rate increases as the ammonia flow rate increases, and the hydrogen flow rate increases as the furnace temperature increases. The flow rate of the first gas (ammonia) can be adjusted according to FIG. 6 to maintain the current flow rate of the second gas (hydrogen). For example, the flow rate can be increased or decreased by at least one flow rate step.

In C2: if the current furnace temperature ^{*}T_{f} minus at least one preset furnace temperature step size Hₜ is greater than the minimum preset furnace temperature T_{fl}, and the regulated flow rate of the first gas is outside the preset range, then the flow rate of the first gas is regulated to the maximum flow rate or the minimum flow rate to obtain the reference flow rate ^{*}Qₐᵣ of the first gas, and the furnace temperature is regulated to obtain the reference furnace temperature ^{*}T_{fr} to maintain the flow rate of the second gas to be stable. It should be noted that since the reference flow rate ^{*}Qₐᵣ is also the flow rate after the first gas is regulated, it is also expressed as ^{*}Qₐᵣ.

As shown in FIG. 5, in this case, ^{*}T_{f}-Hₜ>T_{fl}, ^{*}Qₐᵣ≤Qₐₗ, or ^{*}Qₐᵣ≥Qₐᵤ, if ^{*}Qₐᵣ≤Qₐₗ, then it is regulated to ^{*}Qₐᵣ= Qₐₗ, if ^{*}Qₐᵣ≥Qₐᵤ, then it is regulated to ^{*}Qₐᵣ= Qₐᵤ (that is, if ^{*}Qₐᵣ is not within the preset range, then ^{*}Qₐᵣ is regulated to the upper limit or lower limit of the range), and ^{*}Qₐᵣ at this time is the obtained reference flow rate of the first gas. At this time, ^{*}Qₐᵣ cannot be further adjusted, thus the hydrogen flow rate can only be kept stable by adjusting the furnace temperature. The final furnace temperature obtained is the reference furnace temperature ^{*}T_{fr}.

Referring to FIG. 6, according to the measured value of hydrogen flow rate ^{*}Qₕ, the furnace temperature is adjusted to keep it stable. For example, if the hydrogen flow rate ^{*}Qₕ is 12L/min and ^{*}Qₐ is 8L/min (assumed to be the upper limit value or lower limit value), the furnace temperature to keep the hydrogen flow rate stable should be 680°C, while the actual furnace temperature is 700°C, then it only needs to adjust the furnace temperature to 680°C. The adjustment can be made based on the corresponding relationship among the three in FIG. 6 as a reference. The above example is only for the convenience of illustrating how to adjust according to FIG. 6, and the specific values should be selected according to the actual situation.

In C3: if the current furnace temperature ^{*}T_{f} minus at least one preset furnace temperature step size Hₜ is less than or equal to the minimum preset furnace temperature T_{fl}, the reduced furnace temperature is regulated to the minimum preset furnace temperature to obtain the reference furnace temperature, and the flow rate ^{*}Qₐᵣ of the first gas is regulated to obtain the reference flow rate ^{*}Qₐᵣ of the first gas and maintain the current flow rate ^{*}Qₕ of the second gas to be stable.

As shown in FIG. 5, in this case, ^{*}T_{fr} =^{*}T_{f}-Hₜ≤T_{fl}, that is, the regulated furnace temperature ^{*}T_{fr} is less than or equal to the minimum preset furnace temperature T_{fl}, then the regulated furnace temperature is adjusted to the minimum preset furnace temperature T_{fl}, and the minimum preset furnace temperature T_{fl} at this time is the reference furnace temperature ^{*}T_{fr}. Since the furnace temperature cannot be further adjusted at this time, the hydrogen flow rate ^{*}Qₕ can only be kept stable by adjusting the ammonia flow rate ^{*}Qₐᵣ. The ammonia flow rate obtained at this time is the reference flow rate ^{*}Qₐᵣ of the first gas. It should be noted that since the reference furnace temperature ^{*}T_{fr} is also the furnace temperature after regulation, it is also expressed as ^{*}T_{fr}.

Continuing to refer to FIG. 6, for example, the hydrogen flow rate ^{*}Qₕ is 12L/min, and the reference furnace temperature ^{*}T_{fr} is 680°C (assumed to be the lower limit), then the ammonia flow rate ^{*}Qₕ to keep the hydrogen flow rate stable should be 8L/min, but in fact the ammonia flow rate is 10 L/min, then the ammonia flow rate can be adjusted to 8L/min. The adjustment can be made based on the corresponding relationship among the three in FIG. 6 as a reference. The above example is only for the convenience of illustrating how to adjust according to FIG. 6, and the specific values should be selected according to the actual situation.

After the above adjustments, if the hydrogen flow rate still changes, the above adjustments are continued until the hydrogen flow rate is stable.

In the embodiment of the present disclosure, after using the energy management method to obtain the first reference power ^{*}P_{fcr} of the first energy supplier (PEM fuel cell 121), the hydrogen flow rate and the ammonia flow rate corresponding to ^{*}P_{fcr} can be obtained. In order to keep the hydrogen flow rate stable at this moment to maintain ^{*}P_{fcr}, the ammonia flow rate and the furnace temperature are adjusted according to the above contents of C1~C3, and the ammonia flow rate reference value ^{*}Qₐᵣ and the reference furnace temperature ^{*}T_{fr} corresponding to ^{*}P_{fcr} are output to adjust the ammonia flow rate and the furnace temperature to the corresponding reference values. When the value of ^{*}P_{fcr} changes, the corresponding hydrogen flow rate also changes, and the ammonia flow rate and the furnace temperature are adjusted according to the above contents of C1~C3. Therefore, the whole hybrid function architecture is adjusted in real time to ensure high-efficiency operation.

The above adjustment can optimize the ammonia flow rate and keep the furnace temperature to the lowest, and maximize the operating efficiency of the gas conversion device 11, so that the gas conversion device 11 can provide stable hydrogen for the PEM fuel cell 121 in the fuel cell device 12, and thus the operation of the PEM fuel cell 121 is more efficient and stable.

It should be noted that if ^{*}T_{f}≤T_{f}, that is, the furnace temperature ^{*}T_{f} measured in real time (it is not reduced) is less than or equal to the minimum preset furnace temperature, then the furnace temperature ^{*}T_{f} may be regulated to the minimum preset furnace temperature, and then the ammonia flow rate is adjusted to keep the hydrogen flow rate stable.

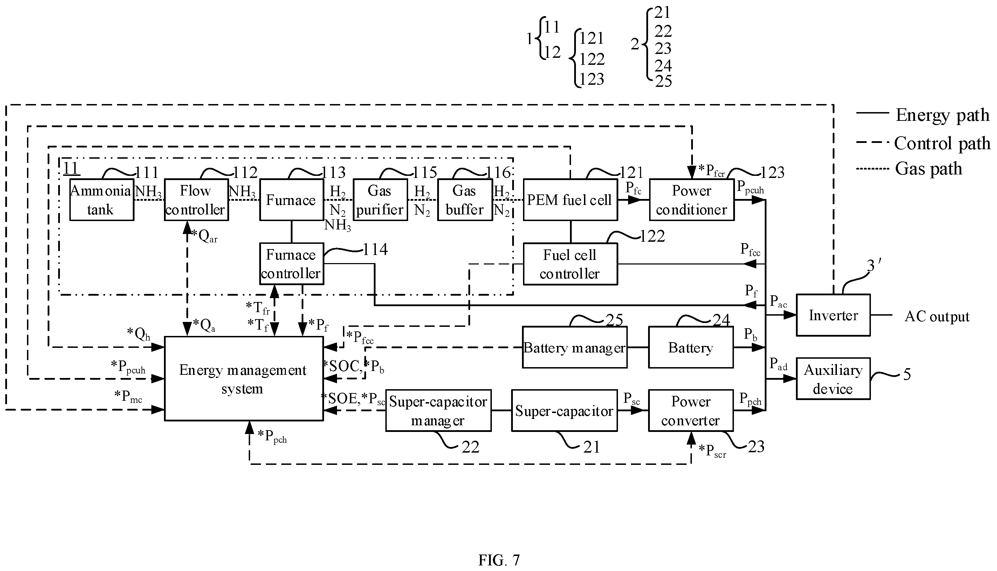

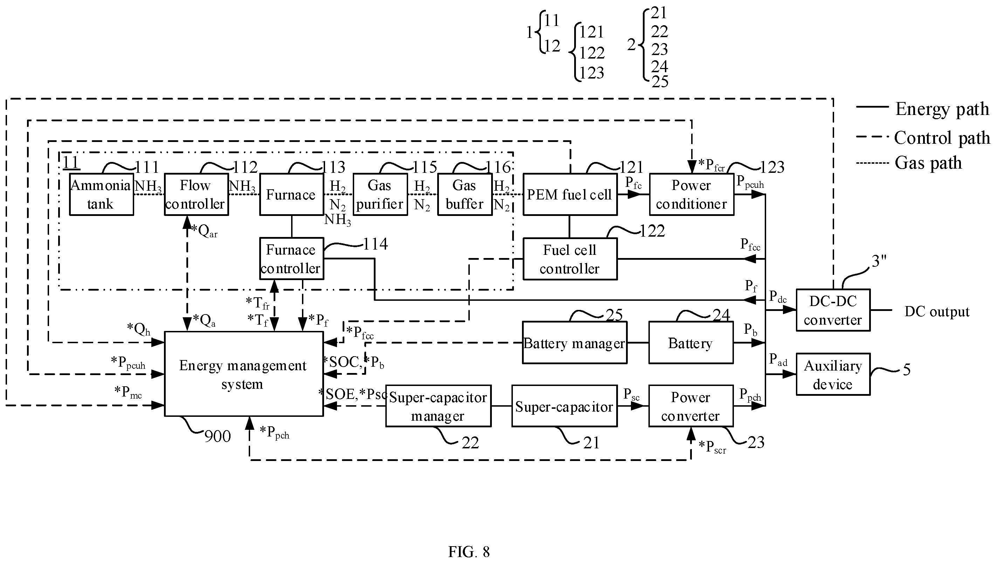

As shown in FIGs. 7 and 8, which are energy conversion architecture diagrams of ammonia-powered proton exchange membrane fuel cell hybrid applications shown in other embodiments of the present disclosure, the difference from FIG. 2 is that in FIG. 2, the motor controller 4 is used and power is output to the motor 3, while in FIG. 7, an inverter 3' is used and AC power is output, and in FIG. 8, a DC-DC converter 3" is used and DC power is output. The energy management method of the embodiments of the present disclosure is suitable for the hybrid applications in FIGs. 7 and 8.

An embodiment of the present disclosure also provides an energy management system 900, including an obtaining module 901 and a processing module 902. The obtaining module 901 is configured to obtain a first current output power and a previous output power of a first energy supplier. The processing module 902 is configured to obtain a current power change rate of the first energy supplier according to the first current output power and the previous output power. The processing module 902 is also configured to obtain a first reference power of the first energy supplier according to the first current output power, the previous output power and the current power change rate. The obtaining module 901 is also configured to obtain a second current output power of a second energy supplier. The processing module 902 is also configured to obtain a second reference power of the second energy supplier according to the first current output power, the second current output power and the first reference power. The obtaining module 901 is also configured to obtain a current flow rate of a first gas, a current flow rate of a second gas, and a current furnace temperature, where the first energy supplier is connected to a gas conversion device, the first gas is converted into the second gas by the gas conversion device, the second gas is used for the first energy supplier to generate electricity, and the current furnace temperature is the current temperature of a furnace in the gas conversion device. The processing module 902 is also configured to obtain a reference flow rate of the first gas and a reference furnace temperature according to the current flow rate of the first gas, the current flow rate of the second gas and the current furnace temperature.

In the embodiment of the present disclosure, the processing module 902 may include an optimizing controller of allocation 60, a fuel cell power limiter 10 and a high-dynamic power limiter 20 as shown in FIG. 3.

Embodiments of the present disclosure also provide a computer device, including a processor, a memory, an input interface and an output interface; the processor is connected to the memory, the input interface and the output interface respectively, where the input interface and the output interface are used to receive data and output data respectively, the memory is used to store a computer program, and the processor is used to call the computer program, so that the computer device executes the energy management methods in any of the above embodiments.

Embodiments of the present disclosure also provide a computer-readable storage medium. The computer-readable storage medium stores a computer program. The computer program is adapted to be loaded and executed by a processor, so that a computer device having the processor executes the energy management methods in any of the above embodiments.

The computer device and the computer-readable storage medium of the embodiments of the present disclosure, by executing the above energy management methods, allocate the load power between the first energy supplier and the second energy supplier optimally, so that the first energy supplier and the second energy supplier operate efficiently, thereby enabling the whole electrical equipment to operate efficiently, while avoiding performance degradation of the first energy supplier and the second energy supplier, and prolonging the service life of the first energy supplier and the second energy supplier..

It should be understood that the present disclosure is not limited in its application to the detailed structure and arrangement of components set forth in this specification. The present disclosure may have other implementations and may be implemented and carried out in various ways. The aforementioned variations and modifications fall within the scope of the present disclosure. It should be understood that the disclosure disclosed and defined in this specification extends to all alternative combinations of two or more individual features mentioned or apparent in the text and/or drawings. All of these different combinations constitute alternative aspects of the present disclosure. The implementations described in this specification illustrate the best mode known for carrying out the present disclosure, and will enable those skilled in the art to utilize the present disclosure.

## Claims

1. An energy management method, comprising:
obtaining a first current output power and a previous output power of a first energy supplier;
obtaining a current power change rate of the first energy supplier according to the first current output power and the previous output power;
obtaining a first reference power of the first energy supplier according to the first current output power, the previous output power and the current power change rate;
obtaining a second current output power of a second energy supplier;
obtaining a second reference power of the second energy supplier according to the first current output power, the second current output power and the first reference power;
obtaining a current flow rate of a first gas, a current flow rate of a second gas and a current furnace temperature; wherein the first energy supplier is connected to a gas conversion device, the first gas is converted into the second gas through the gas conversion device, the second gas is used for the first energy supplier to generate electricity, and the current furnace temperature is a current temperature of a furnace in the gas conversion device; and
obtaining a reference flow rate of the first gas and a reference furnace temperature according to the current flow rate of the first gas, the current flow rate of the second gas, and the current furnace temperature.

2. The method according to claim 1, wherein obtaining the first reference power of the first energy supplier according to the first current output power, the previous output power and the current power change rate, comprises:
obtaining a first preset power threshold of the first energy supplier;
obtaining a first current limited power of the first energy supplier according to the first current output power and the first preset power threshold;
obtaining a previous limited power of the first energy supplier according to the previous output power and the first preset power threshold;
obtaining a power change rate threshold of the first energy supplier;
obtaining the first reference power according to the first current limited power, the previous limited power, the current power change rate and the power change rate threshold.

3. The method according to claim 2, wherein the power change rate threshold comprises a maximum power change rate and a minimum power change rate;
obtaining the first reference power according to the first current limited power, the previous limited power, the current power change rate and the power change rate threshold comprises:
obtaining a maximum dynamic power variable and a minimum dynamic power variable of the first energy supplier according to the maximum power change rate and the minimum power change rate;
obtaining the first reference power according to the current power change rate, the maximum power change rate, the minimum power change rate, the first current limited power, the previous limited power, the maximum dynamic power variable and the minimum dynamic power variable.

4. The method according to claim 3, wherein obtaining the first reference power according to the current power change rate, the maximum power change rate, the minimum power change rate, the first current limited power, the previous limited power, the maximum dynamic power variable and the minimum dynamic power variable, comprises:
if R_{pfc,min}≤R_{pfc}(tₖ)≤R_{pfc,max}, then ^{*}P_{fcr}(tₖ)= ^{*}P_{fcl}(tₖ);
if R_{pfc}(tₖ)<R_{pfc,min}, then ^{*}P_{fcr}(tₖ)= ^{*}P_{fcl}(tₖ₋₁)+ΔP_{fc,min};
if R_{pfc}(tₖ)>R_{pfc,max}, then ^{*}P_{fcr}(tₖ)= ^{*}P_{fcl}(tₖ₋₁)+ΔP_{fc,max};
wherein R_{pfc,min} is the minimum power change rate, R_{pfc,max} is the maximum power change rate, R_{pfc}(tₖ) is the current power change rate, ^{*}P_{fcr}(tₖ) is the first reference power, ^{*}P_{fcl}(tₖ) is the first current limited power, ^{*}P_{fcl}(tₖ₋₁) is the previous limited power, ΔP_{fc,min} is the minimum dynamic power variable, ΔP_{fc,max} is the maximum dynamic power variable, tₖ represents a current moment, tₖ₋₁ represents a previous moment, k≥1 and is a positive integer.

5. The method according to claim 1, wherein obtaining the second reference power of the second energy supplier according to the first current output power, the second current output power and the first reference power, comprises:
obtaining a second preset power threshold of the second energy supplier;
obtaining the second reference power according to the first current output power, the second current output power, the first reference power and the second preset power threshold.

6. The method according to any one of claims 1 to 5, wherein
obtaining the reference flow rate of the first gas and the reference furnace temperature according to the current flow rate of the first gas, the current flow rate of the second gas and the current furnace temperature, comprises:
in a case that the current furnace temperature minus a preset furnace temperature step size is greater than a minimum preset furnace temperature, regulating the current flow rate of the first gas to maintain the current flow rate of the second gas to be stable; in a case that the regulated flow rate of the first gas is within a preset range, continuing to reduce a furnace temperature according to the preset temperature step size and continuing to regulate the flow rate of the first gas to maintain the current flow rate of the second gas to be stable;
in a case that the current furnace temperature minus at least one preset furnace temperature step size is greater than the minimum preset furnace temperature, and the regulated flow rate of the first gas is outside the preset range, regulating the flow rate of the first gas to a maximum flow rate or a minimum flow rate to obtain the reference flow rate of the first gas, and regulating the furnace temperature to obtain the reference furnace temperature to maintain the current flow rate of the second gas to be stable;
in a case that the current furnace temperature minus at least one preset furnace temperature step size is less than or equal to the minimum preset furnace temperature, regulating the reduced furnace temperature to the minimum preset furnace temperature to obtain the reference furnace temperature, and regulating the flow rate of the first gas to obtain the reference flow rate of the first gas to maintain the current flow rate of the second gas to be stable.

7. The method according to any one of claims 1 to 5, wherein the first energy supplier comprises a fuel cell, and the second energy supplier comprises a super-capacitor and a battery;
obtaining the first current output power of the first energy supplier and obtaining the second current output power of the second energy supplier comprises:
obtaining a current load power, a current state of energy of the super-capacitor, and a current state of charge of the battery;
obtaining the first current output power and the second current output power according to the current load power, the current state of energy and the current state of charge.

8. An energy management system, comprising:
an obtaining module, configured to obtain a first current output power and a previous output power of a first energy supplier;
a processing module, configured to obtain a current power change rate of the first energy supplier according to the first current output power and the previous output power;
wherein the processing module is further configured to obtain a first reference power of the first energy supplier according to the first current output power, the previous output power and the current power change rate;
the obtaining module is further configured to obtain a second current output power of a second energy supplier;
the processing module is further configured to obtain a second reference power of the second energy supplier according to the first current output power, the second current output power and the first reference power;
the obtaining module is further configured to obtain a current flow rate of a first gas, a current flow rate of a second gas and a current furnace temperature; wherein the first energy supplier is connected to a gas conversion device, the first gas is converted into the second gas through the gas conversion device, the second gas is used for the first energy supplier to generate electricity, and the current furnace temperature is a current temperature of a furnace in the gas conversion device; and
the processing module is further configured to obtain a reference flow rate of the first gas and a reference furnace temperature according to the current flow rate of the first gas, the current flow rate of the second gas, and the current furnace temperature.

9. A computer device, comprising: a processor, a memory, an input interface and an output interface;
wherein the processor is connected to the memory, the input interface and the output interface respectively, wherein the input interface and the output interface are configured to receive data and output data respectively, the memory is configured to store a computer program, and the processor is configured to call the computer program, so that the computer device executes the method according to any one of claims 1-7.

10. A computer-readable storage medium, wherein the computer-readable storage medium stores a computer program, and the computer program is adapted to be loaded and executed by a processor, so that a computer device having the processor executes the method according to any one of claims 1-7.
